(19) Europäisches Patentamt
European Patent Office
Office européen des brevets

(11) Veröffentlichungsnummer: **0 158 053**
**B1**

(12) # EUROPÄISCHE PATENTSCHRIFT

(45) Veröffentlichungstag der Patentschrift: **08.04.87**

(51) Int. Cl.⁴: **C 08 G 65/32**, C 08 G 18/50

(21) Anmeldenummer: **85101749.1**

(22) Anmeldetag: **16.02.85**

(54) **Sulfonierte Polyoxyalkylenether von 1.2- oder 1.3-Diolen, deren Herstellung und Verwendung.**

(30) Priorität: **01.03.84 DE 3407563**

(43) Veröffentlichungstag der Anmeldung: **16.10.85 Patentblatt 85/42**

(45) Bekanntmachung des Hinweises auf die Patenterteilung: **08.04.87 Patentblatt 87/15**

(84) Benannte Vertragsstaaten: **FR GB IT NL**

(56) Entgegenhaltungen:
**EP-A-0 043 966**
**FR-A-2 382 495**
**US-A-4 226 807**

(73) Patentinhaber: **Th. Goldschmidt AG, Goldschmidtstrasse 100 Postfach 101461, D-4300 Essen 1 (DE)**

(72) Erfinder: **Fock, Jürgen, Dr., Mörsenbroicher Weg 114, D-4000 Düsseldorf 30 (DE)**
Erfinder: **Esselborn, Eberhard, Pilotystrasse 21, D-4300 Essen 1 (DE)**

**EP 0 158 053 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft sulfonierte Polyoxyalkylenether von 1.2- oder 1.3-Diolen, deren Herstellung und Verwendung.

Aus der DE-OS 30 25 807 (& EP-A- 43 966) ist ein Verfahren zur Herstellung von Polyethern unter Erhalt von minderstens zwei freien Hydroxylgruppen am Startalkohol, wobei die Hydroxylgruppen durch höchstens drei Kohlenstoffatome voneinander getrennt sind, und wobei dei Hydroxylgruppe am Polyetherkettenende, gegebenfalls reversibel, blockiert, jedoch gegenüber den Bedingungen der Acetal- oder Ketalspaltung stabil ist, bekannt, welches dadurch gekennzeichnet ist, daß man

a) ein Oxiran der Formel

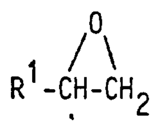

worin $R^1$ ein Wasserstoffrest oder eine gegebenenfalls halogenierte Kohlenwasserstoffgruppe mit 1 bis 30 Kohlenstoffatomen oder die Gruppe $-CH_2OR^2$, in der $R^2$ eine Alkyl- oder Alkenylgruppe bedeutet, und wobei innerhalb des polymeren Moleküls die Gruppe $R^1$ gleich oder verschieden ist,

an einen drei- oder mehrwertigen Alkohol, bie dem mindestens zwei Hydroxylgruppen acetalisiert oder ketalisiert sind, anlagert,

b) die Hydroxylgruppe des erhaltenen Polyethermonools durch Umsetzung mit einer in bezug auf diese Hydroxylgruppe reaktiven Gruppe einer monofunktionellen Verbindung, welche gegenüber den Bedingungen der Acetal- oder Ketalspaltung stabil ist, blockiert und dann

c) das Acetal oder Ketal durch Einwirkung von Säure spaltet.

Die Blockierung der Hydroxylgruppe des in Stufe a) erhaltenen Polyethermonools kann entsprechend dem Verfahren der vorgenannten Offenlegungsschrift durch Umsetzung mit einem Kohlenwasserstoffhalogenid erfolgen. Verwendet man als Kohlenwasserstoffhalogenid Allylchlorid oder Methallylchlorid, kommt man zu Verbindungen, welche endständig eine olefinische Doppelbindung aufweisen, an der weitere Additions -reaktionen durchgeführt werden können. Man erhält hierbei Verbindungen, welche in vielfaltiger Weise eingesetzt werden können. Dabei ist von besonderer Bedeutung, daß die Verbindungen aufgrund ihrer Hydroxylgruppen in 1.2- oder 1.3-Stellung des Startalkohols als modifizierende Komponente bei der Herstellung von Polyurethanen oder Polyestern eingesetzt werden können.

Besonderes Intresse gilt dabei solchen Verbindungen, welche endständig polare Gruppen aufweisen. Von diesen Verbindungen sind insbesondere diejenigen von Bedeutung, welche hydrolysestabil sind.

Gegenstand der vorliegenden Erfindung sind deshalb neue Verbindungen der Formel

$R^1CH_2O\text{-}(C_2H_4O\text{-})_n(C_3H_6O\text{-})_mCH_2CHR^3\,CH_2\text{-}SO_3X$

worin

$R^1$ = 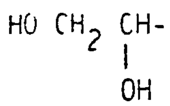 , 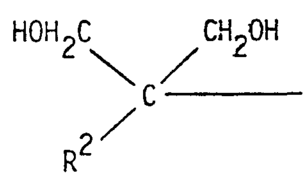 ,

$R^2 = CH_3\text{-}, C_2H_5\text{-}, C_3H_7\text{-},$
$R^3$ = H- oder $CH_3$-,
X = H-, Alkali- oder Ammoniumion,
n = 0 bis 100,
m = 0 bis 50,
$n + m \geqq 1$
ist.

Die Verbindungen sind je nach ihrem Gehalt an Oxyethylen- und/oder Oxypropyleneinheiten flüssige bis wachsartige Verbindungen. Ihre Wasserlöslichkeit bzw. Wasserdispergierbarkeit ist ebenfalls eine Funktion des Oxyethylen- bzw. des Oxypropylengehaltes.

Die erfindungsgemäß hergestellten Verbindungen weisen drei ihre Eigenschaften bestimmenden Strukturelementen auf.

1. Das lineare Makromolekül weist an einem Ende zwei reaktive Hydroxylgruppen auf, die an den Startalkohol gebunden sind, an welchen Alkylenoxid angelagert worden ist.

2. Die Kette des Makromoleküls wird durch Oxyethylen- und/oder Oxypropyleneinheiten gebildet.

3. An dem dem Startalkohol abgewendeten Ende des Makromoleküls befindet sich die polare Gruppe $SO_3X$ in direkter Bindung an Kohlenstoff.

Diese Kombination von Strukturelementen verleiht den erfindungsgemäßen Verbindungen besondere Eingenschaften und ermöglicht ihren Einsatz als Diolkomponente bei Polyadditionsreaktionen, wobei sie allein oder anteilig neben anderen Polyolen eingesetzt werden können.

Die Erfindung betrifft ferner die Herstellung der vorgenannten Verbindungen. Dabei ist das erfindungsgemäße Verfahren dadurch gekennzeichnet, daß man an Verbindungen der Formel

$R^1CH_2O\text{-}(C_2H_4O\text{-})_n(C_3H_6O\text{-})_mCH_2CR^3=CH_2$

eine Verbindung der Formel $HSO_3X$ in an sich bekannter Weise in Gegen wart von Katalysatoren und gegebenenfalls erhöhter Temperatur radikalisch addiert.

Die Herstellung der Allyl- oder Methallylgruppen aufweisenden Ausgangsverbindungen geschieht entsprechend der Lehre der DE-OS 30 25 807. Ausgangsverbindungen sind Glycerin, Trimethylolethan, Trimethylolpropan oder Trimethylolbutan. Jeweils zwei Hydroxylgruppen dieser Verbindungen werden zunächst durch sauer katalysierte Umsetzung mit einem Aldehyd, wie z.B. Formaldehyd, Acetaldehyd, Propionaldehyd, Butyraldehyd, oder einem Keton, wie z.B. Aceton, Methylethylketon, Methyl-iso-butylketon, durch längeres Verweilen bei Raumtemperatur in Gegenwart eines Trockenmittels in das entsprechende Acetal oder Ketal überführt, so daß nur eine reaktionsfähige Hydroxylgruppe erhalten bleibt. An diese Hydroxylgruppe wird in Gegenwart eines basischen Katalysators, wie Kalium- oder Natriummethylat, unter einem Druck von 1 bis 6 bar und bei Temperaturen von 90 bis 120° unter Stickstoff Ethylenoxid und/oder Propylenoxid in solchen Mengen angelagert, daß die Bedingungen für die Indices n und m bzw. für die Summe n + m erfüllt werden. Der erhaltenen Polyoxyalkylenether wird unter Stickstoff mit einem Alkalimetall, wie Natrium oder Kalium oder deren Alkoholate, wie Natrium- bzw. Kaliummethylat, bei 80 bis 120° unter Entfernung des $H_2$-Gases bzw. des Methanols ungesetzt, wobei der entsprechende Alkalipolyether entsteht. Das Alkalisaltz wird sodann mit Allyl bzw. Methallylhalogenid bei 70 bis 100° umgesetzt, das entstehende Alkalihalogenid durch Filtration entfernt und Schließlich das Acetal bzw. Ketal unter Einwirkung einer Saure, wie Salzsäure, Schwefelsäure oder Phosphorsäure, bei ca 80°C gespalten. Damit erhält man die für das erfindungsgemäße Verfahren benötigte Ausgangsverbindung.

Die Herstellung der Ausgangsverbindungen läßt sich durch folgende Reaktionsgleichungen darstellen:

Stufe 1

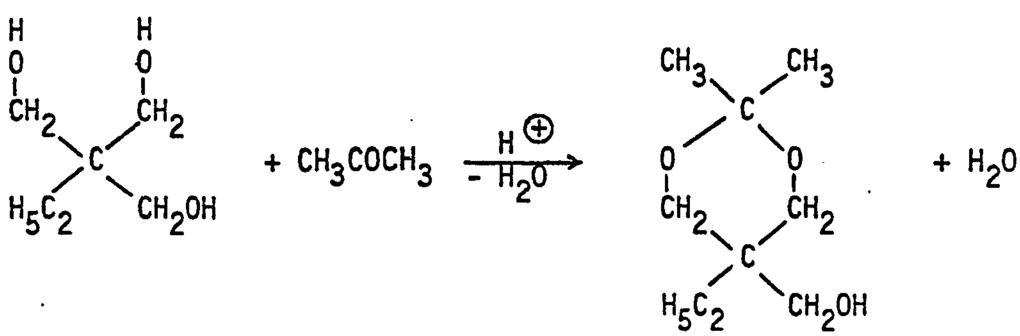


Stufe 2

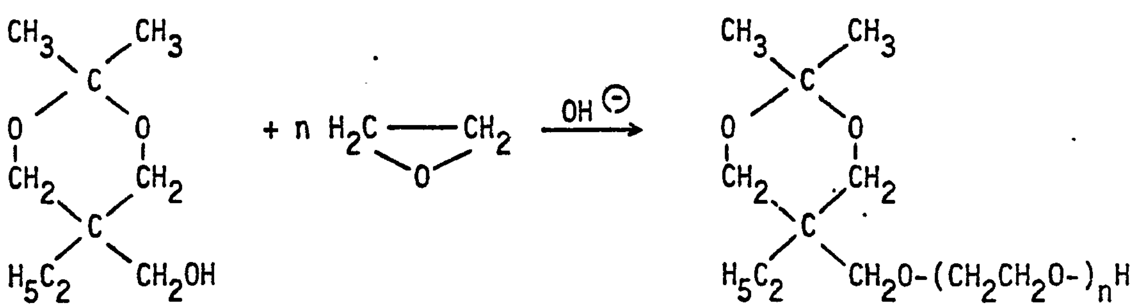

Stufe 3

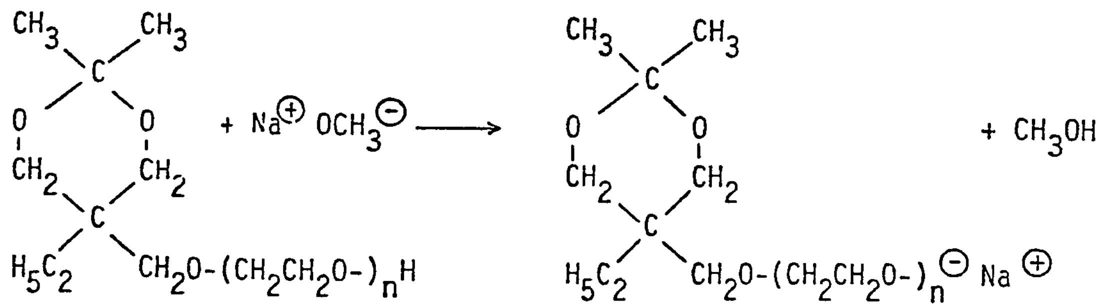


Stufe 4

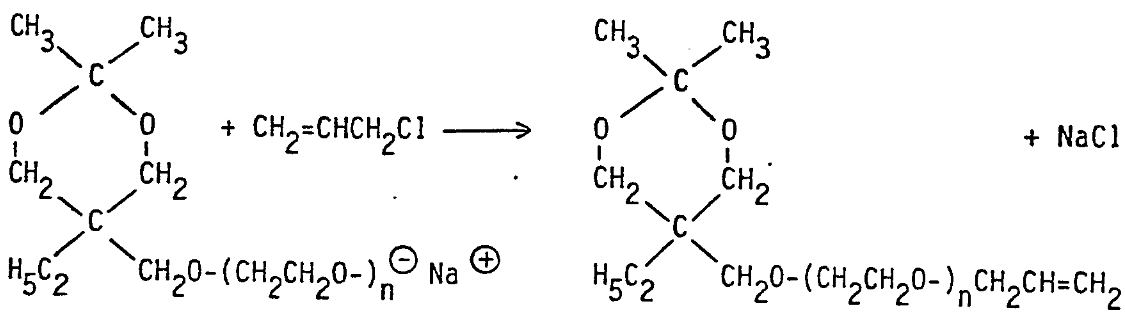


Stufe 5

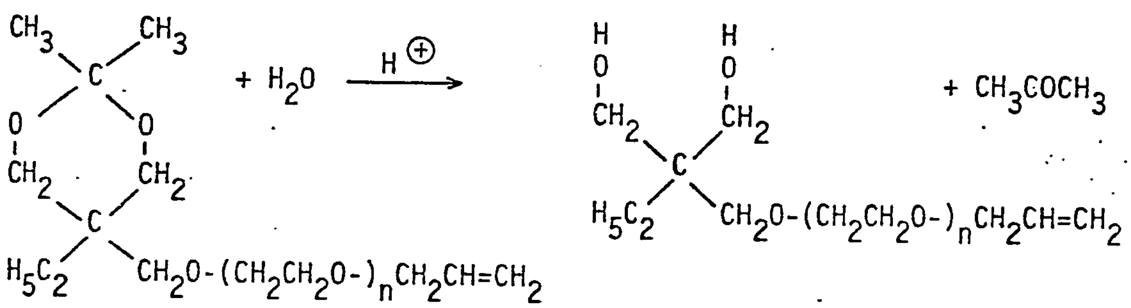

Die Umsetzung dieses Allyl- und/oder Methallylderivates mit ener Verbindung der Formel $HSO_3X$ gelingt in an sich bekannter Weise. Die Additionsreaktion ist z.B. in Houben-Weyl "Methoden der organischen Chemie", Band IX, Seite 380, beschrieben. Bevorzugt verwendet man Ammoniumhydrogensulfit. Die radikalische Addition verläuft mit hohen Ausbeuten in Gegenwart von Luftsauerstoff bei gegebenenfalls mäßig erhöhten Temperaturen von bis zu 40°C. Die Additionsreaktion läßt sich über die Abnahme der Konzentration an Doppelbindungen durch die Jodzahl sowie mittels der Elementarschwefelbestimmung nach Carius verfolgen. Das erfindungsgemäße Verfahren verläuft somit nach folgendem Reaktionsschema:

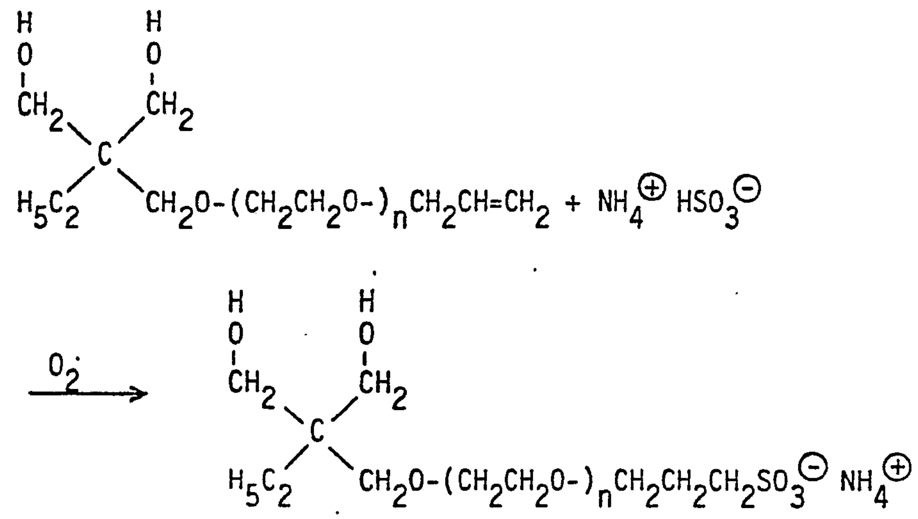


Anstelle des Ammoniumhydrogensulfits kann auch schwefelige Säure, ein saures Alkalisalz der schwefeligen Säure, insbesondere Natriumhydrogensulfit, verwendet werden. Es sind auch andere Metallhydrogensulfite außer den Alkalisalzen brauchbar, jedoch werden diese wegen ihrer geringeren Löslichkeit im allgemeinen nicht verwendet.

Die erfindungsgemäßen Verbindungen sind aufgrund ihrer Strukturelemente in besonderer Weise zur Herstellung bzw. Modifizierung von Polyestern oder Polyurethanen geeignet. Hierdurch werden die Eigenschaften der polymeren Polyadditionsprodukte, insbesondere die Eigenschaften der Oberflächen, in erwünschter Weise beeinflußt. So hat sich überraschenderweise gezeigt, daß härtbare Klebmittel auf Polyurethanbasis in ihren Klebeigenschaften erheblich verbessert werden, wenn man als Polyolkomponente ganz oder als Teil der Polyolkomponente die erfindungsgemäßen Verbindungen einsetzt. Dabei werden überraschenderweise die Zugscherfestigkeit und die Rollenschälfestigkeit bei der Verklebung von Aluminiumblechen wesentlich verbessert.

In dem folgenden Beispiel werden die Herstellung der erfindungsgemäßen Verbindungen sowie die bei Verwendung der erfindungsgemäßen Verbindungen erzielbaren technischen Effekte naher erläutert.

**Beispiel**

A) Herstellung eines Polyether-1.3-diols (nicht erfindungsgemäß)

In 174 g (ca. 1 Mol) 2,2-Dimethyl-5-ethyl-hydroxymethyl-1.3-dioxan werden bei 80°C 7 g Kaliummethylat in einem Reaktor mit einem zwangsfördernden Umlaufsystem in Lösung gebracht. Nach sorgfältiger Spülung mit Reinstickstoff wird der Reaktor auf 110°C geheizt und eine Mischung von 440 g (ca. 10 Mol) Ethylenoxid und 440 g (ca. 7,6 Mol) Propylenoxid so schnell zugegeben, daß die Reaktorinnentemperatur einen Wert von 120°C und der Druck einen Wert von 3 bar nicht überschreiten, Nach vollständiger Einleitung des Alkylenoxidgemisches wird die Temperatur so lange auf 120°C gehalten, bis ein gleichbleibender Druck das Ende der Nachreaktion anzeigt, danach wird bei 80 bis 90°C die Entfernung von Restmonomeren unter Vakuum vorgenommen.

Nach Beendigung der Reaktion werden 50 ml Wasser bei 80°C eingerührt. Anschließend werden 30 g 30 %ige Phosphorsäure zugegeben; es wird 0,25 h gerührt und mit $NaH_2PO_4$ auf einen pH-Wert von 7 eingestellt. Danach wird das Wasser bei 80 bis 90°C in einem Vakuum von 10 Torr abdestilliert und das Produkt mit 10 g eines Filterhilfsmittels auf Silicatbasis abfiltriert.

Die Hydroxylzahl des vom Katalysator durch Filtration getrennten Produktes beträgt 58,4, was einem Molekulargewicht von ca. 960 entspricht.

Zu 960 g (ca. 1 Mol) des erhaltenen Polyalkylenoxids werden nach nochmaliger Trocknung unter einem Stickstoffstrom bei 120°C 24,2 g (ca. 1,05 Mol) Natriummetall in kleinen Portionen zugegeben. Nach Beendigung der Zugabe wird noch für weitere 2 h erhitzt, anschließend auf ca. 50°C abgekühlt und 80,3 g (ca.

1,05 Mol) Allylchlorid unter Stickstoff innerhalb einer 1/2 h zugetropft und danach wiederum auf 120°C aufgeheizt. Das ausgeschiedene Kochsalz wird nach Zusatz eines filterhilfsmittels abfiltriert.

Aus der Jodzahlbestimmung nach Hanus wird ein Umsatz der Kondensationsreaktion von ca. 98,8 ermittelt; die Hydroxylzahl beträgt 1,4.

Die Spaltung des Ketalringes des erhaltenen Polyethers erfolgt, indem dieser im Gewichtsverhältnis 1 : 1 : 1 mit 1 n Salzsäure und Ethanol vermischt und 8 h lang unter Rückfluß erhitzt wird. Nach Beendigung der Spaltungsreaktion wird das noch heiße Reaktionsgemisch mit 50 %iger wäßriger Natronlauge neutralisiert. Anschließend werden alle flüchtigen Bestandteile im Bereich von 70 bis 80°C bei einem Vakuum von 10 Torr abdestilliert. Das anfallende Kochsalz läßt sich wiederum unter Verwendung eines Filterhilfsmittels in der Wärme vollständig abscheiden.

Die Hydroxylzahl des erhaltenen Polyethers beträgt 109.

B) Herstellung des sulfonierten Polyether-1.3-diols (erfindungsgemäß)

960 g (ca. 1 Mol) des erhaltenen Produktes werden in 1000 ml einer Mischung von 5 Gew.-Teilen Wasser und 1 Gew.-Teil Ethanol gelöst. Unter starkem Rühren und unter Luftzutritt werden innerhalb won 2 h, 149 g (ca. 1,5 Mol) Ammoniumhydrogensulfit, gelöst in 300 ml Wasser, sowie 50 ml 25 %ige wäßrige Ammoniaklösung zugegeben. Nach einer Nachreaktionszeit von nochmals 2 h werden Wasser und Ethanol bei 60 bis 80°C und einem Vakuum von 10 Torr abdestilliert; das ausgefallene, überschüssige Ammoniumhydrogensulfit wird mit Hilfe eines Filterhilfsmittels abfiltriert.

Die aus der Jodzahl des erhaltenen Produktes berechnete Reaktionsausbeute beträgt 89,5 %. Aus der Bestimmung des Gesamtschwefels nach Carius ergibt sich eine Reaktionsausbeute von 91,5 %.

Die Hydroxylzahl, die nach Überführung des Ammoniumsulfonats in das entsprechende Natriumsulfonat erhalten wird, beträgt 101.

C) Herstellung eines Klebstoffs auf Polyurethanbasis unter Verwendung won sulfoniertem Polyether-1.3-diol und anwendungstechnische Prüfung

Ein Klebstoff auf Polyurethanbasis wird aus einer Polyolkomponente folgender Zusammensetzung hergestellt

23 Gew.-Teile sulfoniertes Polyether-1.3-diol gemäß Abschnitt A

17 Gew.-Teile hydroxyfunktionelles Polyacrylat

2 Gew.-Teile propoxyliertes Bisphenol A

Das hydroxyfunktionelle Polyakrylat wird durch Copolymerisation von 80 g (ca. 0,63 Mol) n-Butylacrylat, 15 g (ca. 0,17 Mol) Vinylacetat und 5 g (ca. 0,04 Mol) 2-Hydroxyethylacrylat in Gegenwart von 2,2 g (ca. 0,03 Mol) 2-Mercaptoethanol und 0,3 g Azodiisobuttersäurenitril entsprechend der DE-OS 30 47 926 erhalten.

Das propoxylierte Bisphenol A wird durch Alkoxylierung von 228 g (ca. 1 Mol) Bisphenol A und 203 g (ca. 3,5 Mol) Propylenoxid in Gegenwart von 20 g Kaliummethylat bei 125°C in einem Autoklaven gemäß der DE-OS 31 23 059 erhalten.

Als Polyisocyanatkomponente wird eine Mischung aus 96 Gew.-Teilen eines handelsüblichen aliphatischen Triisocyanats der näherungsweisen Strukturformel

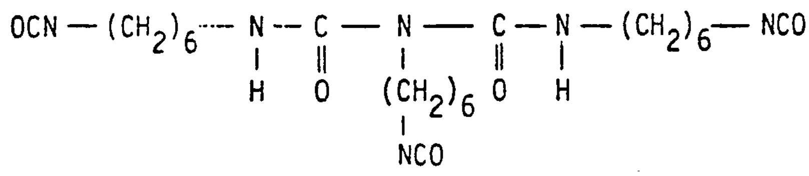

mit einem NCO-Gehalt von 22 Gew.-% und 2 Gew.-Teilen γ-Glycidylpropyltrimethoxysilan eingesetzt.

Das molare Verhältnis von Hydroxylgruppen zu Isocyanatgruppen beträgt in der Klebstoffnischung 1 : 1.

Die Zugscherfestigkeit und die Rollenschälfestigkeit werden gemäß DIN 53 455 bzw. DIN 53 289 ermittelt. Hierzu werden zwei 0,5 mm dicke, durch Chromschwefelsäure vorbehandelte Aluminiumbleche der Legierung Al Cu Mg 2 pl miteinander verklebt. Folgende Werte werden erhalten: Zugscherfestigkeit 2,8 [N/mm$^2$] und Rollenschälfestigkeit 3,2 [Q-M/mm].

D) Vergleichende Prüfung

In einem Vergleichsversuch wird statt des sulfonierten Polyether-1.3-diols ein α,ω-Polyetherdiol und ein nicht sulfoniertes Polyether-1.3-diol entsprechender Zusammensetzung und entsprechenden Molekulargewichts sowie zwei Gemische von sulfoniertem Polyether-1.3-diol und α,ω-Polyetherdiol zur Anwendung gebracht, und es wird der erhaltene Klebstoff in der oben beschriebenen Weise geprüft. Die Ergebnisse dieser Prüfung sind in der folgenden Tabelle wiedergegeben.

**Tabelle**

| Diolkomponenten | Verhältnis der Komponenten α, ω-Polyetherdiol/ Polyether-1.3-diol | Zugscher-festigkeit [N/mm²] | Rollenschäl-festigkeit [N/mm] |
|---|---|---|---|
| α, ω-Polyetherdiol | 100/0 | 1,8 | 1,3 |
| Polyether-1.3-diol | 0/100 | 1,1 | 0,6 |
| Sulfoniertes Polyether-1.3-diol | 0/100 | 2,8 | 3,2 |
| Gemisch α, ω-Polyetherdiol sulfoniertes Polyether-1.3-diol | 66/34<br>34/66 | 1,9<br>2,0 | 2,0<br>1,9 |

Die Steigerung der Verbundfestigkeit durch die Sulfonatgruppe des sulfonierten Polyether-1.3-diols ist deutlich. Die Zugscherfestigkeit und die Rollenschälfestigkeit erhöhen sich um einen Faktor won ca. 2,5 bzw. 5,3 gegenober dem Kleber, der mit dem nicht sulfonierten Polyether-1.3-diol hergestellt wurde. Darüber hinaus ist die Steigerung der Rollenschälfestigkeit gegenüber dem Klebstoff auf Basis des α,ω-Polyetherdiols überraschend; hier sollte wegen des niedrigeren Molekulargewichts der Hauptkette des Makromoleküls eher ein gegenläufiges Resultat zu erwarten gewesen sein.

**Patentansprüche**

1. Verbindungen der Formel
$R^1CH_2O\text{-}(C_2H_4O\text{-})_n(C_3H_6O\text{-})_mCH_2CHR^3CH_2\text{-}SO_3X$
wobei

$R^1$ = 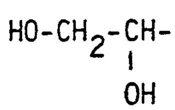 , 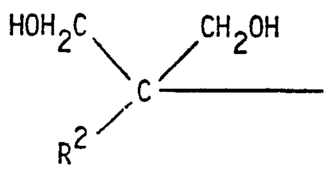 ,

$R^2 = CH_3\text{-}, C_2H_5\text{-}, C_3H_7\text{-},$
$R^3 =$ H- oder $CH_3$-,
X = H-, Alkali- oder Ammoniumion,
n = 0 bis 100,
m = 0 bis 50,
$n + m \geqq 1$
ist.

2. Verfahren zur Herstellung der Verbindungen des Anspruchs 1, dadurch gekennzeichnet, daß man an Verbindungen der Formel
$R^1CH_2O\text{-}(C_2H_4O\text{-})_n(C_3H_6O\text{-})_mCH_2CR^3{=}CH_2$
eine Verbindung der Formel $HSO_3X$ in an sich bekannter Weise in Gegenwart von Katalysatoren und gegebenenfalls erhöhter Temperatur radikalisch addiert.

3. Verwendung der Verbindungen nach Anspruch 1 oder 2 als alleinige oder anteilige Polyolkomponente zur Herstellung von härtbaren Klebmitteln auf Polyurethanbasis.

## Claims

1. Compounds of the formula $R^1CH_2O\text{-}(C_2H_4O\text{-})_n(C_3H_6O\text{-})_mCH_2CHR^3CH_2\text{-}SO_3X$

where

$R^1$ = 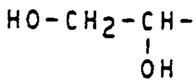 or 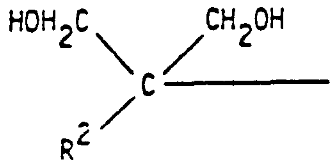 .

$R^2 = CH_3\text{-}, C_2H_5\text{-}$ or $C_3H_7\text{-}$,
$R^3 = H\text{-}$ or $CH_3\text{-}$,
$X = H\text{-}$, an alkali ion or ammonium ion,
$n = 0$ to 100,
$m = 0$ to 50 and
$n + m \geqq 1$.

2. Process for the preparation of the compounds of claim 1, characterized in that a compound of the formula $HSO_3X$ is added to compounds of the formula
$R^1CH_2O\text{-}(C_2H_4O\text{-})_n(C_3H_6O\text{-})_mCH_2CR^3{=}CH_2$
in a manner known per se in the presence of catalysts and, if appropriate, at an elevated temperature by a free radical mechanism.

3. Use of the compounds according to claim 1 or 2 as the sole polyol component or a fractional polyol component for the manufacture of curable adhesives based on polyurethanes.

## Revendications

1. Composés de formule
$R^1CH_2O\text{-}(C_2H_4O\text{-})_n(C_3H_6O\text{-})_mCH_2CHR^3\,CH_2\text{-}SO_3X$
dans laquelle

$R^1$ = 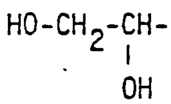 , 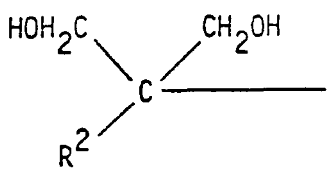 ,

$R^2 = CH_3\text{-}, C_2H_5\text{-}, C_3H_7\text{-}$,
$R^3 = H\text{-}$ ou $CH_3\text{-}$,
$X = H\text{-}$, ou un ion métal alcalin ou ammonium,
$n = 0$ à 100,
$m = 0$ à 50,
$n + m \geqq 1$.

2. Procédé pour la préparation des composés de formule 1, caractérisé en ce qu'on fixe par addition radicalaire, sur des composés de formule
$R^1CH_2O\text{-}(C_2H_4O\text{-})_n(C_3H_6O\text{-})_mCH_2CR^3{=}CH_2$
un composé de formule $HSO_3X$, d'une manière connue en soi, en présence de catalyseurs et éventuellement à température élevée.

3. Utilisation des composés selon les revendications 1 ou 2 comme composant polyol unique ou partiel destinè à la préparation d'adhésifs durcissables à base de polyuréthanne.